Europäisches Patentamt

European Patent Office

Office européen des brevets

(11) Publication number: **0 275 335**
**A1**

## EUROPEAN PATENT APPLICATION

(21) Application number: **87100655.7**

(22) Date of filing: **20.01.87**

(51) Int. Cl.4 **A23G 9/10**

(43) Date of publication of application:
**27.07.88 Bulletin 88/30**

(84) Designated Contracting States:
**AT BE CH DE ES FR GB GR IT LI LU NL SE**

(71) Applicant: **Huang, Cheng Fu**
**3 F., No. 22, Lane 20, Sec. 2 Chungshan N. Rd.**
**Taipei(TW)**

(72) Inventor: **Huang, Cheng Fu**
**3 F., No. 22, Lane 20, Sec. 2 Chungshan N. Rd.**
**Taipei(TW)**

(74) Representative: **Casalonga, Axel et al**
**BUREAU D.A. CASALONGA - JOSSE**
**Morassistrasse 8**
**D-8000 Munich 5(DE)**

(54) Slush or ice cream maker.

(57) A machine (10) suitable for placement in a freezer for making slush or ice cream in a cylindrical container (41). The machine (10) comprises a platform (11) which can be lengthwise adjusted, at least four rollers (22), (23), (24) and (25) providing adjustable support distance for the container (41), a driving means (21) to rotate the rollers (22), (23), (24) and (25) and container (41), a scraping means (61) disposed on the shaft (44) of the container (41) to scrape the freezing slush or ice cream and to be used as a second safety means. A first safety means (7) which comprises a base plate (71), a control plate (72) and a flexible element (73) engaged together. When the slush or ice cream is hard enough, the control plate (72) and the flexible element (73) will rotate respective to the base plate (71) so that the shaft (44) will rotate together with the container (41). Further, even if the first safety means (7) is out of order, the scraping means (61) will free from the shaft (44) of the container (41), then the scraping means (61) will rotate together with the contractor in order to be used as a second safety means.

FIG. 1

## Slush or Ice Cream Maker

The present invention relates to a machine suitable for making slush or ice cream in a freezer, and more particularly to one suitable for making the above products in cylindrical containers of various dimensions.

Hand-cranked ice cream freezers have been known for many years. They usually comprise a metal container in which the ice cream mix is contained, a surrounding vessel holding a freezing mixture (usually ice mixed with salt), "paddles" for stirring the mix, and drive means for the paddles, usually comprising a crank handle and gear train.

Ice cream makers with power driven paddles are known. However, the power requirements are significant. As the ice cream mix progressively freezes, it becomes increasingly difficult to rotate the paddles in the ice cream. As the freezing process is nears completion, rotation becomes more and more difficult, if not impossible. Where the paddles are motor driven, a relatively powerful motor is required. A clutch was often used to prevent overloading the motor. Such items considerably add to the cost of the machine.

U.S. Patent No. 2,993,350 to Smith discloses an ice cream maker for use in a refrigerator freezer. A cylindrical container with a stirring blade on its inside wall is rotated about its longitudinal axis. The container contains the ice cream mix. The motor is directly engaged to the container via a gear train. However, to fit the drive mechanism, the container has to be custom made. The dimensions of the container are also fixed. Also, the drive unit has a drive shaft which extends through the wall of the freezer unit. That is, existing freezers have to be modified to accommodate the ice cream maker.

What is needed is a machine that provides a new way of agitating the ice cream mix whereby rotating paddles and the like are obviated. The power requirement for agitating the ice cream should be low. Preferably, common household containers of various dimensions can be used in place of expensive custom made containers. Safety is of the utmost concern because the machine can be used in the house, where there may be children who may tamper with the machine. The machine should be inexpensive, and its use in the refrigerator should require no modification of the refrigerator.

The device of the present invention meets the above needs. It is a machine suitable for placement in a freezer for making slush or ice cream in a cylindrical container. The machine comprises a platform, at least four rollers, namely first and third rollers rotatably mounted about a common first acxis of rotation, and second and fourth rollers rotatably mounted about a common second axis of rotation. The first and second axes of rotation are substantially parallel. All four rollers are mounted on the platform. The rollers are capable of supporting a cylindrical container such that the longitudinal axis of the container is substantially parallel to the axes of rotation of the rollers. The machine further comprises means for adjusting the axial distances between the rollers so that the machine can be used for cylindrical containers of various lengths, and means for adjusting the distance between the two axes of rotation so that the machine can be used for cylindrical containers of various diameters.

Preferably the platform comprises two separable side by side sections, a first section and a second section. The first and second rollers are mounted on the first section, and the third and fourth rollers are mounted on the second section of the platform. The second and fourth rollers are preferably each mounted on at least one end support.

Preferably the means for adjusting the axial distances between the rollers comprises at least one horizontal support member, wherein at least one section of the platform is slidably received on the support member such that the section is capable of sliding apart from the other section on the horizontal support member, in a direction substantially parallel to the axes of rotation of the rollers, such that the distance between the rollers along their axes of rotation can be varied.

Preferably the means for adjusting the distance between the two axes of rotation comprise the first and second sections of the platform, each having at least one series of holes therein, each series of holes being arranged in a column substantially perpendicular to the axes of rotation of the rollers. The screws each have a head larger than the holes. The screws pass through the holes and threadedly engage the end supports of the second and the fourth rollers, thereby affixing the two rollers to the platform.

The present invention further provides a first safety means to allow the shaft of the container to rotate together with the container when the freezing slush or ice cream is hard enough, thereby, the container will rotate with the lowest load.

The present invention still provides a scraping means mounted on the shaft of the container. The scraping means comprises a scraping plate to scrape the frozen slush or ice cream. The scraping plate will be rotated for an angle and then the scraping means will rotate together with the container to be used as further safety means.

One way of carrying out the invention is described in detailed below with reference to drawings which illustrate only one specific embodiment, in which:

FIG. 1 is a perspective view of the present invention:

FIG. 2 is a top view of the present invention in which the container is removed:

FIG. 3 is a fragmentary exploded view of the roller of the present invention;

FIG. 4 is a side view of the present invention showing the scraping plate in contact with the container and the container driven by the roller;

FIG. 5 is an exploded view of the scraping plate and the second safety means which is mounted on the shaft of the container;

FIG.6A-6C show the scraping plate to be turned a certain angle;

FIG. 7 is a side view of the first safety means of the present invention;

FIG. 8 shows the first safety means contacting with the rod of the shaft of the container in order to stabilize the shaft;

FIG. 9 shows the first safety means bent down by the rod of the shaft so that the shaft can be rotated freely; and

FIG. 10 is a fragmentary perspective view of the present invention to show the using condition when the slush or ice cream maker is disposed in the freezer.

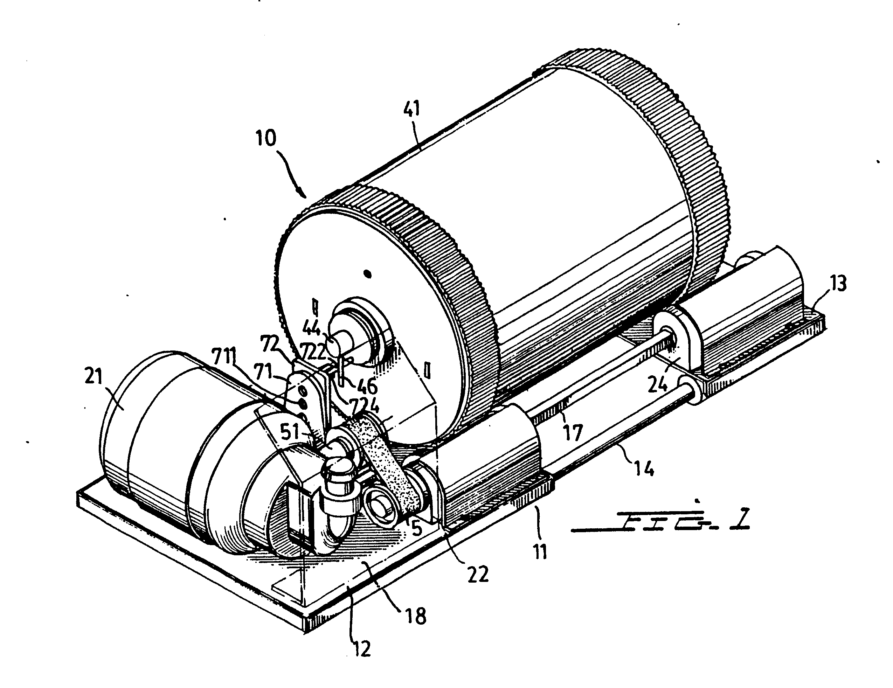

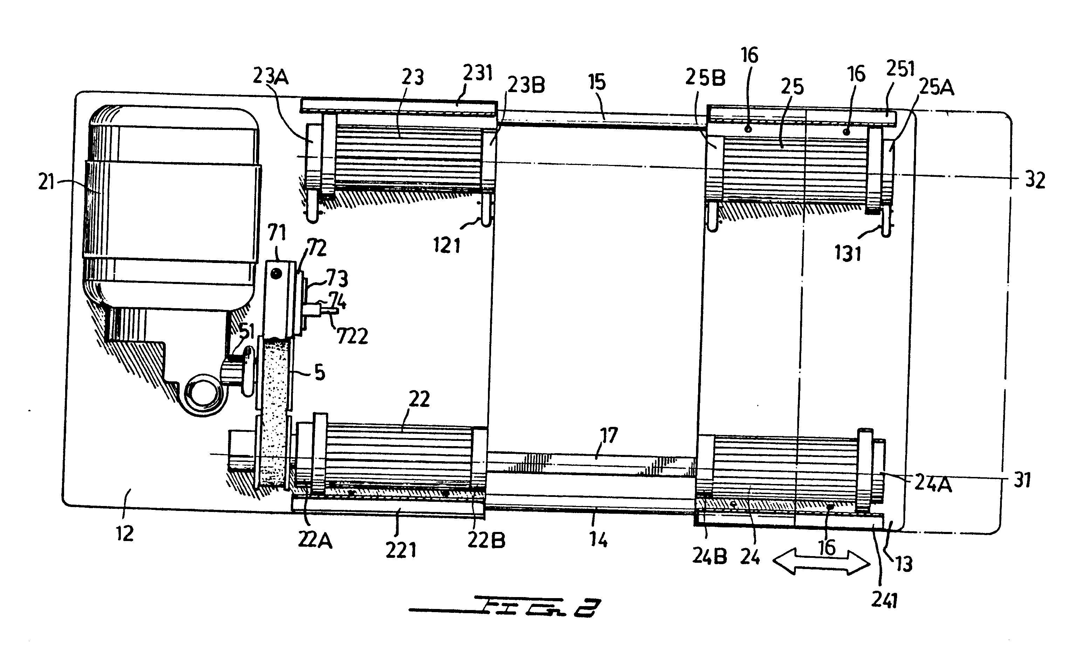

Referring to FIG. 1 and FIG.2, the machine 10 comprises a platform 11, preferably comprising sections 12 and 13. A first roller 22, second roller 23, third roller 24, and fourth roller 25, are rotatably mounted on the platform. Preferably the first and second rollers 22 and 23 are mounted on the first section 12, and the third and fourth rollers 24 and 25 are mounted on the second section 13.

The first roller 22 and third roller 24 are rotatably mounted about a common first axis of rotation 31. The second roller 23 and fourth roller 25 are rotatably mounted about a common second axis of rotation 32. The first and second axes of rotation are substantially parallel. Each of the rollers 22, 23, 24, 25 has a guiding means 221, 231, 241 and 251 to prevent to operator from being hurt by the rollers.

The four rollers are capable of supporting a cylindrical container 41 such that the longitudinal axis of the container 40 is substantially parallel to the axes of rotation 31 and 32 of the rollers.

There are means for adjusting the axial distance between the first and third rollers 22 and 24, and between the second and fourth rollers 23 and 25, so that the machine can be used for cylindrical containers of various lengths. There are means for adjusting the distance between the axes of rotation 31 and 32 of the rollers, so that the machine can be used for cylindrical containers of various diamenters. Preferably each roller is cylindrical in shape, and is rotatably supported on two end supports (22A, 22B; 23A, 23B; 24A, 24B; and 25A, 25B, respectively).

The means of adjusting the axial distance between the rollers comprises at least one horizontal support member, wherein at least one section is slidably received on the support member such that the section is capable of sliding apart from the other section on the horizontal support member, in a direction substantially parallel to the axes of rotation of the rollers, such that the distance between the rollers along their axes of rotation can be varied. There are also means for fixing the position of the sliding section with respect to the horizontal section.

For example, referring to FIGS. 1, 2 and 4, two peripheral horizontal support members 14 and 15 can be seen. Preferably the horizontal support member 14 is a rod slidably received in sheaths 141 in sections 12 and 13, respectively. Preferably the horizontal support member 15 is a rod slidably received in sheaths 151 in sections 12 and 13, respectively. The sheaths are affixed to the periphery of the sections, and are substantially parallel to the axes of rotation of the rollers. Therefore both sections 12 and 13 are slidably received on the horizontal support members 14 and 15. The sections can slide apart from each other in a direction substantially parallel to the axes of rotation of the rollers, such that the axial distance between the first roller 22 and third roller 24, and the axial distance between the second roller 23 and fourth roller 25, can be adjusted. The axes of rotation 31 and 32 are maintained substantially parallel.

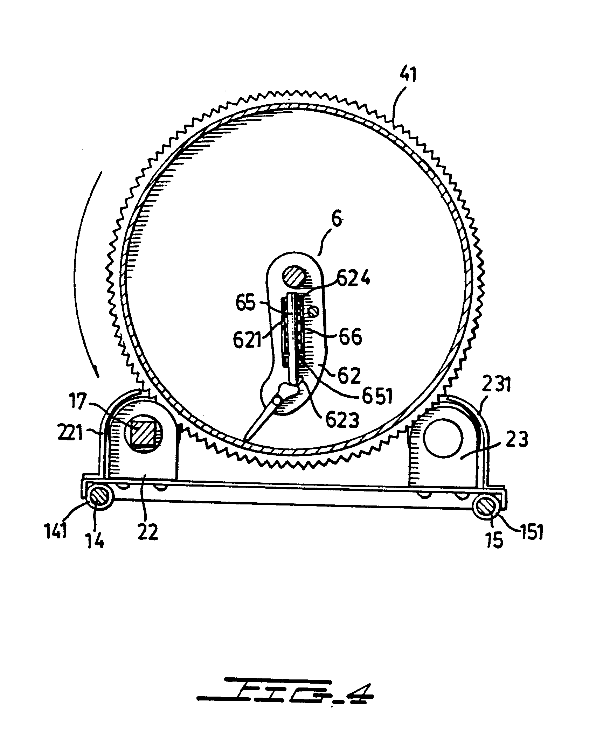

As shown in FIG. 4, the means for fixing the position of the sections 12 and 13 with respect to the horizontal support members 14 and 15 comprises screws 16 (as shown in FIG. 1) each passing through, and threadedly engaging one of the sheaths (141 or 151). By tightening the screws 16 against the horizontal support members 14 and 15, the screws 16 can render sections 12 and 13 immobile against the support members 14 and 15 by means of friction.

By adjusting the distance between the separable sections 12 and 13, the axial distance between the rollers can be adjusted. The machine can thus be used for cylindrical container of various lengths.

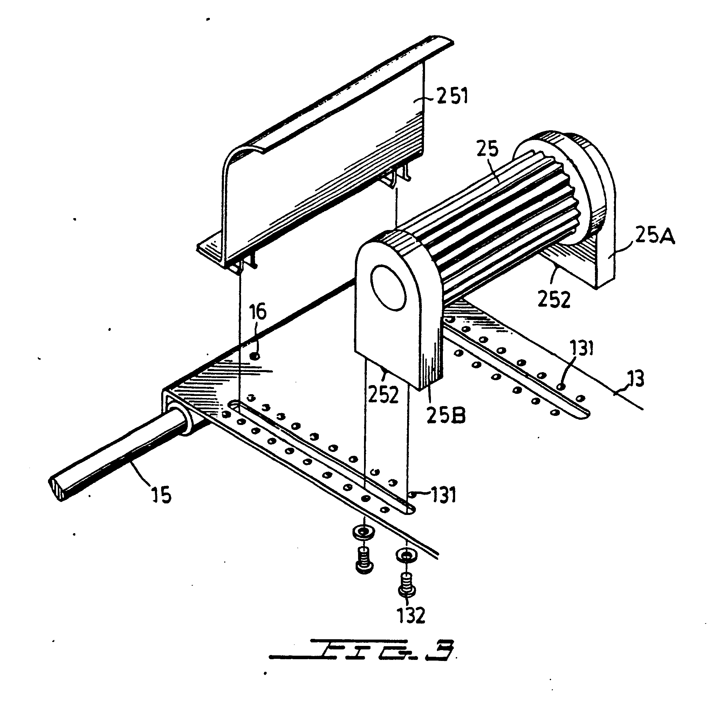

Further, referring to FIGS. 1, 2 and 3, it can be seen that sections 12 and 13 each have series of holes (121 on section 12; and 131 on section 13). Each of these series of holes is arranged in a column substantially perpendicular to the axes of rotation 31 and 32. Preferably the two series of holes on each section are spaced by a distance roughly equal to distance between the end supports of the roller. In section 12 or 13, screws 122 or 132, each having a head larger than the holes, each passing through a hole (in series 121 or 131) and threadedly engaging one end support 232 or 252 the roller 23 or 25, thereby fixing the roller 23 or 25 to section 12 or 13(only the roller 25, screw 132 and section 13 are shown in FIG. 3). Roller 23 is similarly fixed to section 13. The holes are placed such that the rollers 23 and 25 can only be mounted such that they share a common axis of rotation 32, which is parallel to axis of rotation 31 of rollers 22 and 24. By affixing the end supports of the rollers on top of the appropriate holes, the distance between axes of rotation 31 and 32 of the rollers can be adjusted.

There are drive means which drive at least one roller. Referring to FIG. 1, it can be seen that the drive means comprise an electric motor 21, which drives the first roller 22 via bolted wheel 5. A speed reducer 51 is disposed between the motor 21 and bolt 5 to reduce the rotational speed to a range between 15rpm to about 60 rpm. A further guiding means 18 is disposed on the first section 12 adjacent to the motor 21 so as to prevent the operator from being hurt by the rotation of the motor 21.

Preferably both the first and third rollers 22 and 24 are driven by the motor 21. For example, connecting means 17 can be used to axially connect the two rollers 22 and 24, so that both are driven at the same time. The connecting means can comprise a rod shaped connector which has a rectangular cross-section connects the two rollers.

The container 41 can be any convenient household container. It can be opened at one end or both. Container 41 can be made of glass or transparent plastic such that the contents inside the container can be observed. It can also be made of metal for better heat transfer characteristics. Of course, the machine can also be sold complete with its own container 41. Container 41 can be sealed with a removable cover such that it can be filled with an ice cream mix or slush mix, and such that the ice cream or slush can be removed after it has been properly frozen.

The machine of the present invention is suitable for use in a household freezer having a door comprising a resilient sealing strip for keeping the external heat out. An ice cream mix or slush mix is placed into container 41. Preferably the container is only partially filled in order to allow proper mixing, ideally the container is between 1/3 and 1.2 filled. The container is then sealed. Container 41 is placed on the top of the rollers of machine 10. Machine 10 is placed inside the freezer. The motor 21 is turned on; it rotates the rollers 22 and 24; and thus container 41.

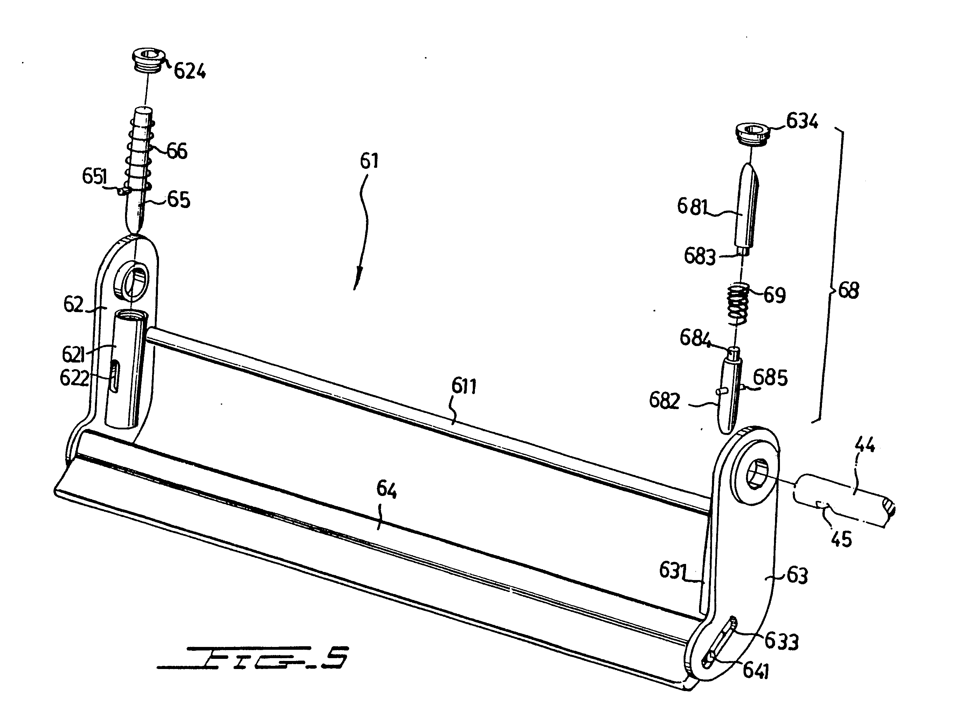

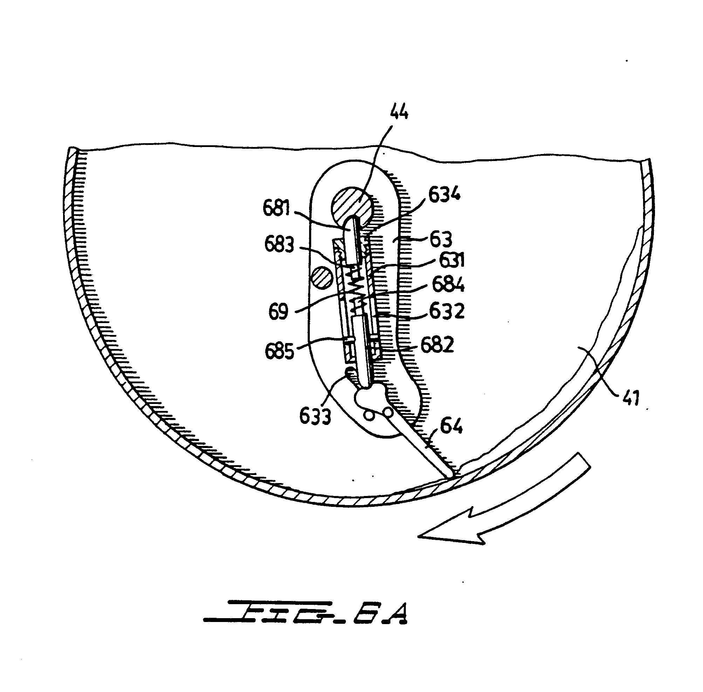

As shown in FIG. 4 and 5, a scraping means 61 disposed on the shaft 44 of the container 41 comprises two supporting plates 62 and 63 each of which has a hollow tube 621 or 631 welded on the inner surface. Each hollow tube 621 or 631 has two slots 622 or 632 (only one slot 622 shown in FIG. 6 on side wall). Each supporting plate 62 or 63 has a slot 623 or 633 (only slot 633 shown in FIG. 5). The scraping means 61 further comprises a scraping plate 64 which has two protrusions 641, one at either sides. The scraping plate 64 contacts with the wall of the container 41 to scrape the mix of slush or ice cream; therefore the freezing speed will be increased and the texture of the ice cream is comparatively fine. The protrusions 641 are inserted into slots 622 and 632 in order to be slidably engaged therein. The first hollow tube 621 has a vertical rod 65 disposed therein. The vertical rod 65 comprises two protuberances 651 to slide in the slot 622 when the vertical rod 65 is inserted in the hollow tube 62. A spring 66 is disposed around the vertical rod 65. A hollow head 624 disposed on the top of the hollow tube 62 allows the vertical rod 65 to pass through. The spring 66 is arranged between the hollow head 624 and the protuberance 651 of the vertical rod 65. Another hollow tube 63 also has a hollow head 634 mounted on the top, a further vertical rod 68 and a spring 69 disposed therein. The further vertical rod 68 is divided into a upper part 681 and a lower part 682. The lower part 682 comprises two protuberances 685 on its side wall to slide in the slot 632 of the hollow tube 63. The bottom end of the upper part 681 and the top end of the lower part 682 each has a pin 683 or 684. The spring 69 is disposed between the pins 683 and 684. Referring to FIG. 5, the shaft 44 has a groove 45 to allow the top end of the upper part 681 of the vertical rod 68 to be inserted therein. Further, a connecting rod 611 is disposed between the supporting plates 62 and 63 to maintain the distance therebetween.

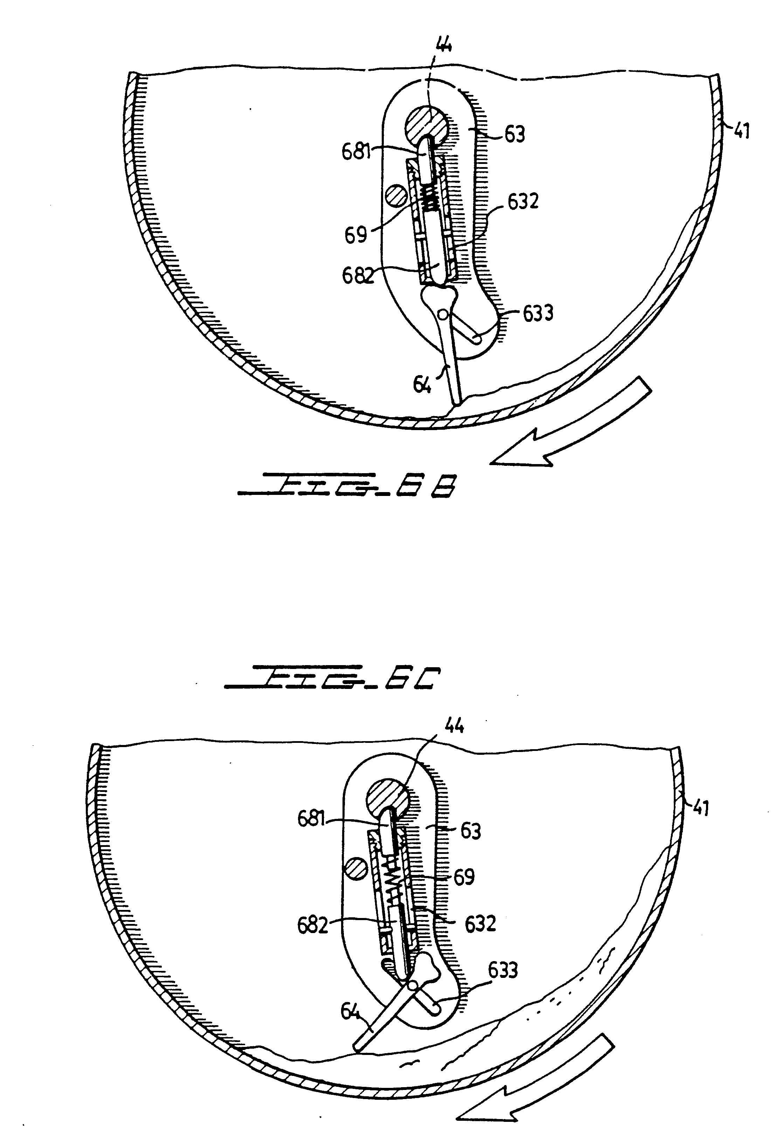

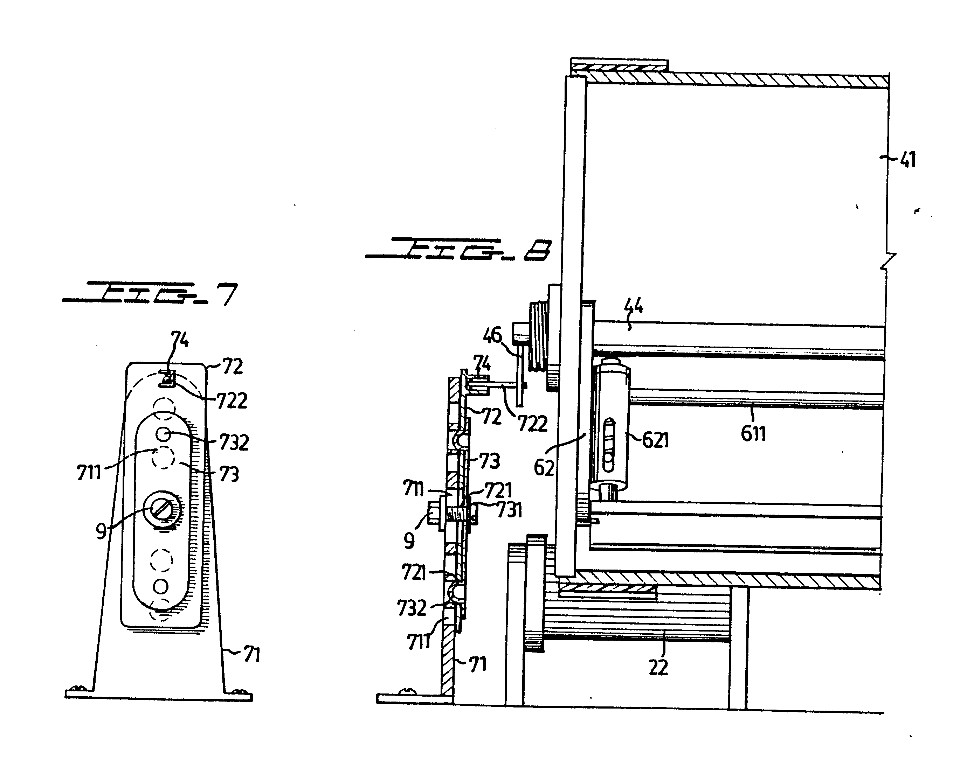

Referring to FIG. 1 again, it can be seen that the container 41 comprises a control rod 46 disposed on the outer part of its shaft 44. The control rod 46 is perpendicular to the axis of the container 41 and extends downwardly. Referring to FIGS. 7 and 8, it can be seen that the first safety means 7 comprises a base plate 71, a control plate 72, and a flexible element 73. The base plate 71 is mounted on the first section 12. As can be seen in the FIG. 7, the base plate 71 has a plurality of holes 711 vertically aligned therein. The middle hole 711 is an elliptical hole. The control plate 72 also comprises a plurality of holes 721 vertically aligned. However, the middle hole 721 is a circular hole. The top of the control plate 72 has a transverse rod 722 pivoted thereon in order to contact with the control rod 46 of the container 41. The flexible element 73 comprises two protrusions 732 and a middle 731 between the protrusions 732. A screw 9 is disposed through the middle holes 711, 721, and 731 of the base plate 71, control plate 72, and flexible element 73. The protrusions 732 of the flexible element 73 are inserted into the holes 711 and 721 of the base and control plate 71 and 72 (the other two holes 721 of the control plate 72 are aligned with the holes 711 of the base plate 71). Further, a guiding means 74 having three surfaces shields the transversed rod 722, so that the transverse rod 722 can rotate clockwise and can not rotate counterclockwise.

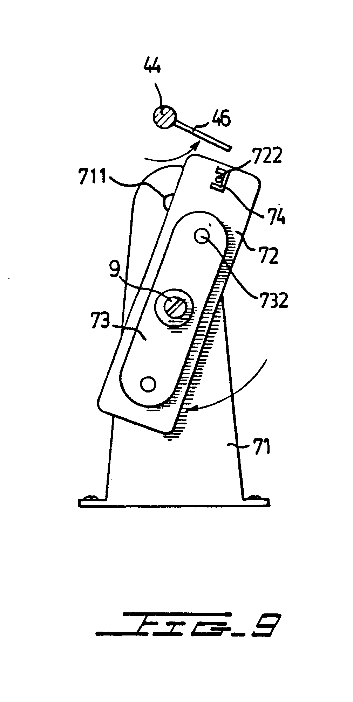

When the slush or ice cream in the container 41 is hard enogh, the scraping means 61 is pressed by the solid article of slush or ice cream, and the control rod 46 of the shaft 44 is forced to rotate. The transverse rod 722 is then pressed. Therefore, the protrusion 732 of the flexible element 73 is removed from the holes 711 of the base plate 71, then the control plate 72 together with the flexible element 73 can rotate. That is, as shown in FIG. 9, the transverse rod 722 could not contact with the control rod 46. Accordingly, the shaft 44 of the container 41 will rotate together with the container 41. The scraping means 61 will not scrape the ice cream anymore. Once the first safety means is out of order, referring to FIG. 6A through 6C, the scraping plate 64 is rotated, that is, the scraping means 61 will rotate together with the container 41; then the scraping plate 64 will not scrape the ice cream to form the second safety.

Depending on the final product desired, the content inside the container 41 can be an ice cream mix (for either soft or regular ice cream), or fruit or vegetable juices (for making slush) and the like. The container and its contents are gradually cooled to a freezing temperature. The rotation keeps the contents well mixed and evenly distributed. This prevents lumps from forming in the container 41. The content gradually thickens upon cooling and finally solidifies. Depending on the amount of the content in the container 41, and the temperature in the freezer, ice cream can be formed in as little as about two hours. When the ice cream or slush is properly frozen, container 41 can be lifted off the rollers, and the ice cream or slush can be removed for consumption.

Preferably machine 10 is placed with the container 41 rotating upwards and away from a user facing the freezer. This reduces the possibility of fingers being caught between the container and the rollers.

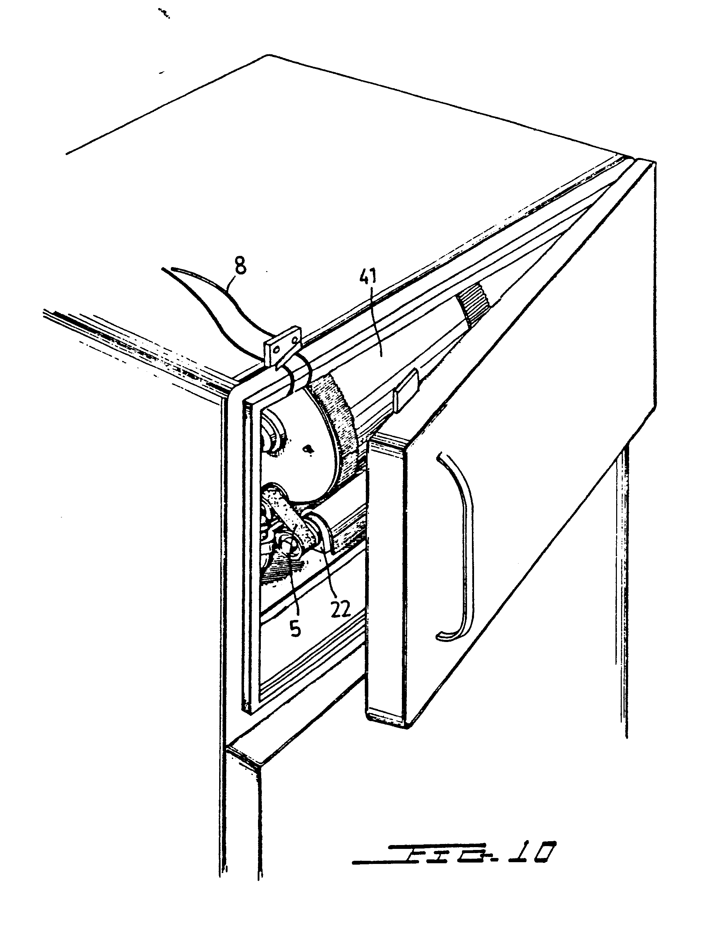

Preferably the motor 21 is powered by a power cord 8 extending outside the freezer (as shown in FIG. 10). The power cord 8 is sufficiently thin so that it can extend outside the freezer without interfering with the proper closure of the freezer door. For example, the power cord can be made by using thin and flat conductors sandwiched in a polyurethane film. The thickness of the cable can be as little as 0.15 mm. The resilient sealing strip of the freezer door is slightly deformed where the power cord passes out of the freezer, but otherwise maintains a good seal. Preferably the power cord 8 allows electricity to flow only when a compressive force is applied to it, e.g., when the freezer door is closed on the power cord 8.

As various possible embodiments might be made of the above invention without departing from the scope of the invention, it is to be understood that all matter herein described or shown in the accompanying drawings is to be interpreted as illustrative and not in a limiting sense. Thus it will be appreciated that the drawings are exemplary of a preferred embodiment of the invention and that the scope of the invention is intended to be limited only by the scope of the appended claims.

## Claims

1. A machine (10) suitable for placement in a freezer for making slush or ice cream in a cylindrical container (41), the machine comprising:
(a) a platform (11);
(b) at least four rollers, (22), (23), (24) and (25) namely
(i) first and third rollers (22) and (24) rotatably mounted about a common first axis of rotation (31);
(ii) second and fourth rollers (23) and (25) rotatably mounted about a common second axis of rotation (32);
the first and second axes of rotation (31) and (32) being substantially parallel to each other, all four rollers (22), (23), (24) and (25) being mounted on the platform (11), the rollers (22), (23), (24) and (25) being capable of supporting a cylindrical container (41) which comprises a shaft (44) with a groove (45) on its inner side and a control rod (46) on its outer part, such that the longitudinal axis of the container (41) is substantially parallel to the axes of rotation (31) and (32) of the rollers (22), (23), (24) and(25);
(c) drive means (21) driving at least one of the rollers (22), (23), (24) and (25), thereby rotating the cylindrical container (41);
(d) means for adjusting the axial distances between the rollers (22) and (24) or (23) and (26) so that the machine (10) is usable for cylindrical containers (41) of various lengths; and
(e) means for adjusting the distance between the two axes of rotation (31) and (32), so that the machine (10) can be used for cylindrical containers (41) of various diameters;
(f) a scraping means (61) disposed on the shaft (44) of the container (41), which comprises two supporting plate (62) and (63) and one scraping plate (64) to scrape the mix of the slush or ice cream in the container (41);

(g) a safety means (7) disposed on the platform contacting with the control rod (46) of the shaft (44) of the container (41);

characterized in that:

the platform (11) comprises a first section (12) and a second section (13), said sections (12) and (13) being separable side by side sections, the first and second rollers (22) and (23) are mounted on the first section (11) and the third and fourth rollers (24) and (25) are mounted on the second section, the means for adjusting the axial distance between the rollers comprising at least one horizontal support member (14) or (15), at least one section being slidably received on the support member (14) or (15) such that the section is capable of sliding apart from the other section on said horizontal support member (14) or (15) in a direction substantially parallel to the axes of rotation (31) and (32) of the rollers, such that the distance between the rollers along their axes of rotation can be varied, and the platform (11) further comprises means for fixing the position of the sliding section with respect to the support member; the scraping means (61) comprises two supporting plates (62) and (63), each of said scraping means (62) or (63) having a hollow tube (621) or (631) welded on the inner side and a slot (623) or (632) at lower end, the scraping means (61) further comprising a scraping plate (64) having a protrusion (641) on either side to be slidably inserted into the slots (623) and (633) of the supporting plates 62) and (63), each of the hollow tubes (621) or (631) has two slots (622) or (632) on side wall, one of the hollow tubes (621) has a vertical rod (65) with two protuberances (651) to be slidably inserted into the slots (623) of the hollow tube (62) and a spring (66) mounted around the vertical rod (65), the other hollow tube (63) has another vertical rod (68) which can be divided into upper and lower parts (681) and (682), each of which has a pin (683) or (684) on the bottom end or upper end, the lower part (682) further has two protuberances (685) to be slidablly inserted into the slots (632) of the other hollow tube (63), a spring (69) is disposed between the pins (683) and (684) of the upper and lower parts (681) and (682), the top ends of the vertical rods (68) are aligned against the shaft of the container, thereby, the scraping plate (64) can be rotated for a angle by the force of frozen slush or ice cream to allow the scraping means (61) to rotate together with the container (41); the safety means (7) comprises a base plate (71) with a plurality of holes (711), a control plate (72) with a plurality of holes (721) and a transverse rod, and a flexible element (73) which has two protrusions (732) and one hole (731), the holes (721) of the control plate (72) are aligned with the holes (71) of the base hole (71), the middle holes (711) and (721) of the base and control plates (71) and (72) and the hole (731) of flexible element (73) have a screw (9) inserted through to be engaged together, the protrusions (732) of the flexible element (73) are inserted into the relative holes (711) and (721) of teh base and control plates (71) and (72), the transverse rod (722) of the control plate (72) is aligned against the control rod (46) of the container (41); so that the control plate (72) together with the flexible element (73) will be rotated by the control rod (46) of the shaft (44) of the container (41) when the slush or ice cream is frozen hard enough.

2. The machine (10) of claim 1 characterized in that the means for adjusting the distance between the axes of rotation (31) and (32) comprises the first and second sections (12) and (13) of the platform (11), each having at least one series of holes (121) and 131) therein, a series of holes (121) and (131) being arranged in a column substantially perpendicular to the axes of rotation (31) and (32) of the rollers, and means for removably mounting the second and fourth rollers (23) and (25) on these holes.

3. The machine (10) of claim 2 characterized in that the second and fourth rollers (23) and (25) are each mounted on at least one end support and wherein the mounting means comprise screws (122) and (132) each having a head larger than the holes (121) and (131), the screws (122) and (132) passing through the holes (121) and (131) and threadedly engaging the end supports of the second and fourth rollers (23) and (25), thereby fixing the rollers (23) and (25) to the platform (11).

4. The machine (10) of claim 1 comprising means (17) axially connecting the roller (22) driven by the drive means (21) and another roller (24), such that the drive means (21) drive both rollers (22) and (24).

5. The machine (10) of claim 4 wherein the connecting means (17) comprise a rod shaped connector connected to one of the driven rollers, the connector slidably received in an axial opening in the other driven roller.

6. The machine (10) of claim 1 wherein the drive means comprises an electric motor (21).

7. A machine (10) suitable for placement in a freezer for making slush or ice cream in a cylindrical container (41), the machine comprising:

(a) a platform (11);

(b) at least four rollers (22), (23), (24) and (25), namely

(i) first and third rollers (23) and (25) rotatably mounted about a common first axis of rotation (31);

(ii) second and fourth rollers (23) and (25) rotatably mounted on a common second axis of rotation (32);

the first and second axes of rotation (31) and (32) being substantially parallel, all four rollers (22), (23), (24) and (25) being mounted on the platform (11), the rollers being capable of supporting a cylindrical container (41) which comprises a shaft (44) with a groove (45) on its inner side and a control rod (46) on its outer part, such that the longitudinal axis of the container (41) is substantially parallel to the axes of rotation (31) and (32) of the rollers (22), (23), (24) and (25);

(c) drive means (21) driving at least one of the rollers, thereby rotating the cylindrical container (41);

(d) means for adjusting the axial distances between the rollers (22) and (24) or (23) and (25) so that the machine can be used for cylindrical containers (41) of various lengths; and

(e) means for adjusting the distance between the two axes of rotation (31) and (32), so that the machine (10) can be used for cylindrical containers (41) of various diameters;

(f) a scraping means (61) disposed on the shaft (44) of the container (41), which comprises two supporting plate (62) and (63) and one scraping plate (64) to scrape the mix of the slush or ice cream in the container (41);

(g) a safety means (7) disposed on the platform (11) contact with the control rod (46) of the shaft (44) of the container (14); said freezer having a door comprising a peripheral resilient sealing strip to facilitate keeping the external heat out; characterized in that:

the motor (21) is powered through a power cord (8) which is sufficiently thin to allow the wire to extend outside the freezer without interfering with the proper closure of the freezer door.

8. The machine (10) of claim 7 characterized in that: the power cord (8) allows electricity to flow only when a compressive force is applied to it.

FIG. 1

0 275 335

FIG. 2

_FIG. 3_

_FIG_4

FIG.5

0 275 335

FIG. 6A

FIG_6B

FIG_6C

FIG_7

74
72
722
732
711
73
73
9
71

FIG_8

41

44

46
74
72
722
621
62
611
711
73
721
731
9
721
732
711
71
22

0 275 335

FIG_9

FIG. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-1 071 406 (S. SALVARELLI) <br> * Figures 1,2; page 1 * | 1-7 | A 23 G 9/10 |
| Y | US-A-3 046 755 (R.Y. SALE) <br> * Figure 2; column 3, lines 51-61 * | 1-7 | |
| A,D | US-A-2 993 350 (J.D. SMITH) | | |
| A | DE-C- 845 049 (E. GIACIN) <br> * Figures 1,2; page 2, lines 81-91 * | 1 | |
| A | US-A-2 541 814 (N.E. GADDINI) <br> * Figure 2; column 3, line 64 - column 4, line 27 * | 1 | TECHNICAL FIELDS SEARCHED (Int. Cl.4) |
| A | FR-A- 386 750 (SNOW FLAKE MANUFACTURING COMP.) | | A 23 G |

The present search report has been drawn up for all claims

| Place of search | Date of completion of the search | Examiner |
|---|---|---|
| THE HAGUE | 02-09-1987 | GUYON R.H. |